# EUROPEAN PATENT SPECIFICATION

(11) **EP 4 360 804 B1**
(45) Date of publication and mention of the grant of the patent: **25.03.2026**
(21) Application number: 21946964.0
(22) Date of filing: 21.06.2021
(51) Int. Cl.: G05B 19/4093, B23Q 7/04, B23Q 3/155, B23Q 3/157, B23Q 17/09, G05B 19/4065

(54) **TOOL TRANSPORT SYSTEM, CONTROL METHOD, AND CONTROL PROGRAM**
WERKZEUGTRANSPORTSYSTEM, STEUERUNGSVERFAHREN UND STEUERUNGSPROGRAMM
SYSTÈME DE TRANSPORT D'OUTIL, PROCÉDÉ DE COMMANDE ET PROGRAMME DE COMMANDE

(43) Date of publication of application: 01.05.2024
(73) Proprietor: DMG Mori Co., Ltd., Yamatokoriyama-shi, Nara 639-1160 (JP)
(72) Inventor: YASUGI, Eisuke, Yamatokoriyama-shi Nara 639-1160 (JP)
(74) Representative: Grünecker Patent- und Rechtsanwälte PartG mbB
(86) International application number: PCT/JP2021/023365
(87) International publication number: WO 2022/269673

(56) References cited:
- JP-A- S59 166 437
- JP-B1- 4 927 228
- JP-B1- 6 775 704
- JP-B1- 6 860 735
- US-A- 5 885 200

## Description

### Technical Field

The present disclosure relates to a technology for automatically transferring tools to a machine tool.

### Background Art

JP 6793278B (Patent Document 1) discloses a tool transfer system that automatically transfers tools used in machining to a machine tool. This tool transfer system has a tool storage section in which a plurality of tool holders are able to be stored, and transfers designated tool holders to the machine tool. Also, the tool transfer system removes tool holders holding unnecessary tools from the machine tool.

JP 6 775704 B1 discloses the preamble of the independent claims, and in particular a transfer device configured to transfer a designated tool holder among a tool holder in the machine tool, a tool holder in the tool storage section, and a tool holder in the workstation, to a designated transfer destination, which is one of the machine tool, the tool storage section, and the workstation.

US 5 885 200 A discloses a system configured to determine the status of tool in a tool magazine and to determine whether the tool can be used for further machining or whether the tool shall be discarded.

### Citation List

### Patent Document

Patent Document 1: Japanese Patent No. 6729390

### Summary of Invention

### Technical Problem

The tool transfer system disclosed in Patent Document 1 transfers tools removed from the machine tool to the tool storage section. The tools removed from the machine tool may include not only usable tools but also unusable tools. If the unusable tools are transferred to the tool storage section, the unusable tools remain in the tool storage section. This results in a wasteful use of storage space for tool holders in the tool storage section. To prevent such waste, there is a desire to secure storage space for tool holders in the tool storage section.

### Solution to Problem

In an example of the present disclosure, a tool transfer system includes: a machine tool; and a tool storage section in which a plurality of tool holders are able to be stored. Each of the tool holders being capable of holding a tool. The tool transfer system further includes: a workstation for a worker to perform work for the tool holders; a transfer device for transferring a designated tool holder among a tool holder in the machine tool, a tool holder in the tool storage section, and a tool holder in the workstation, to a designated transfer destination, which is one of the machine tool, the tool storage section, and the workstation; and a controller for controlling the tool transfer system. The controller executes: processing for determining whether or not a tool holder to be removed from the machine tool includes a tool holder holding an unusable tool; and processing for controlling the transfer device so as to transfer the tool holder to be removed, from the machine tool to the workstation if the tool holder to be removed includes a tool holder holding an unusable tool.

In an example of the present disclosure, the controller further executes processing for controlling the transfer device so as to transfer the tool holder to be removed, from the machine tool to the tool storage section if the tool holder to be removed does not include a tool holder holding an unusable tool.

In an example of the present disclosure, the controller further executes processing for determining the tool holder to be removed out of a plurality of tool holders that are held by the machine tool. In the determining processing, a tool holder holding an unusable tool is preferentially determined as the tool holder to be removed over a tool holder holding a usable tool.

In an example of the present disclosure, if a tool holder to be removed includes a tool holder holding an unusable tool and a tool holder holding a usable tool, the controller further executes processing for controlling the transfer device so as to transfer the tool holder holding the unusable tool to the workstation and thereafter transferring the tool holder holding the usable tool to the tool storage section.

In an example of the present disclosure, a plurality of tool holders are able to be stored in the workstation. The number of tool holders able to be stored in the workstation is smaller than the number of tool holders able to be stored in the tool storage section.

In an example of the present disclosure, if a tool holder holding an unusable tool has been transferred from the machine tool to the workstation, and there is no vacant tool holder storage space in the workstation, the controller further executes processing for controlling the transfer device so as to remove, from the workstation, a tool holder holding a new tool among tool holders stored in the workstation.

In another example of the present disclosure, a control method for a tool transfer system is provided. The tool transfer system includes: a machine tool; and a tool storage section in which a plurality of tool holders are able to be stored. Each of the tool holders being capable of holding a tool. The tool transfer system further includes: a workstation for a worker to perform work for the tool holders; and a transfer device for transferring a designated tool holder among a tool holder in the machine tool, a tool holder in the tool storage section, and a tool holder in the workstation, to a designated transfer destination, which is one of the machine tool, the tool storage section, and the workstation. The control method includes: a step of determining whether or not a tool holder to be removed from the machine tool includes a tool holder holding an unusable tool; and a step of controlling the transfer device so as to transfer the tool holder to be removed, from the machine tool to the workstation if the tool holder to be removed includes a tool holder holding an unusable tool.

In another example of the present disclosure, a control program for a tool transfer system is provided. The tool transfer system includes: a machine tool; and a tool storage section in which a plurality of tool holders are able to be stored. Each of the tool holders being capable of holding a tool. The tool transfer system further includes: a workstation for a worker to perform work for the tool holders; and a transfer device for transferring a designated tool holder among a tool holder in the machine tool, a tool holder in the tool storage section, and a tool holder in the workstation, to a designated transfer destination, which is one of the machine tool, the tool storage section, and the workstation. The control program causes the tool transfer system to execute: a step of determining whether or not a tool holder to be removed from the machine tool includes a tool holder holding an unusable tool; and a step of controlling the transfer device so as to transfer the tool holder to be removed, from the machine tool to the workstation if the tool holder to be removed includes a tool holder holding an unusable tool.

The above and other objects, features, aspects and advantages of the present invention will become apparent from the following detailed description of the invention as understood in connection with the accompanying drawings.

### Brief Description of the Drawings

FIG. 1 shows an outer appearance of a tool transfer system.
FIG. 2 shows a configuration example of drive mechanisms of the tool transfer system.
FIG. 3 schematically shows an example of a mode of removing tool holders in the tool transfer system.
FIG. 4 shows an example of functional constituents of the tool transfer system.
FIG. 5 shows an example of a data structure of tool information.
FIG. 6 shows an example of input to a transfer control unit and output of the transfer control unit in response to the input.
FIG. 7 shows an example of input to the transfer control unit and output of the transfer control unit in response to the input.
FIG. 8 shows an example of input to a determination unit and output of the determination unit in response to the input.
FIG. 9 schematically shows an example of a mode of removing tool holders in the tool transfer system.
FIG. 10 schematically shows a flow of a process of delivering a tool holder from a workstation to a tool storage section.
FIG. 11 schematically shows a flow of a process of delivering a tool holder from the tool storage section to a machine tool.
FIG. 12 schematically shows a flow of a process of removing a tool holder from the machine tool and moving the removed tool holder to the workstation.
FIG. 13 is a schematic diagram showing an example of a hardware configuration of a management device.
FIG. 14 is a block diagram showing a main hardware configuration of a PLC (Programmable Logic Controller).
FIG. 15 is a schematic diagram showing an example of a hardware configuration of an operation terminal.
FIG. 16 is a flowchart showing a flow of processing for removing a tool holder from the machine tool.

### Description of Embodiments

Hereinafter, embodiments according to the present invention will be described with reference to the drawings. In the following description, identical components and constituent elements are given identical reference signs. Those components and constituent elements also have the same names and functions. Accordingly, detailed descriptions thereof are not repeated. Note that the following embodiments and variations may be selectively combined as appropriate.

### A. Outer appearance of tool transfer system 10

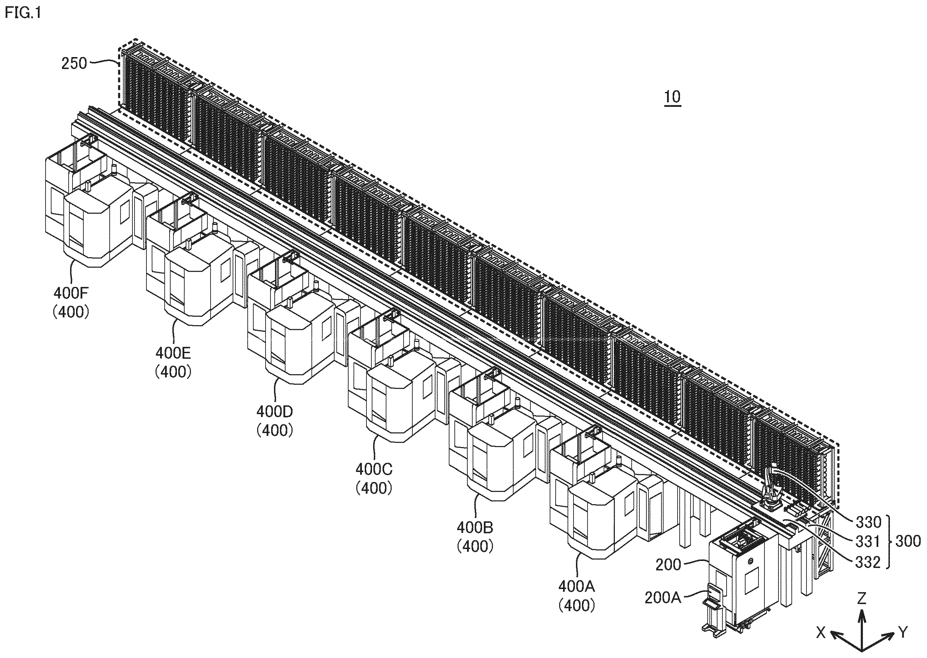

A tool transfer system 10 is described with reference to FIG. 1. FIG. 1 shows an outer appearance of the tool transfer system 10.

As shown in FIG. 1, the tool transfer system 10 includes a workstation 200, a tool storage section 250, a transfer device 300, and machine tools 400.

The workstation 200 is a place where a worker performs work for tool holders. A tool holder is a pod capable of holding a tool. For example, the worker performs work to set tool holders or work to retrieve tool holders at the workstation 200.

The workstation 200 includes an operation terminal 200A. The operation terminal 200A accepts various operations made to the tool transfer system 10.

A plurality of tool holders may be stored in the tool storage section 250. The tool storage section 250 functions as a temporary storage place for the tool holders.

The transfer device 300 transfers a designated tool holder among tool holders in the workstation 200, tool holders in the tool storage section 250, and tool holders in the machine tools 400, to a designated transfer destination, which is one of the workstation 200, the tool storage section 250, and the machine tools 400.

In the following, a transfer mode in which the transfer device 300 carries a tool holder from the workstation 200 to the tool storage section 250 or any of the machine tools 400, or a transfer mode in which the transfer device 300 carries a tool holder from the tool storage section 250 to any of the machine tools 400 is also expressed as "to deliver".

Further, a transfer mode in which the transfer device 300 carries a tool holder from the tool storage section 250 or any of the machine tools 400 to the workstation 200, or a transfer mode in which the transfer device 300 carries a tool holder from any of the machine tools 400 to the tool storage section 250 is also expressed as "to remove (move)".

The term "transfer device" as used herein is a concept that encompasses various devices with a function of transferring tool holders. The following description takes a four- to seven-axis drive articulated robot as an example of the transfer device 300, but the transfer device 300 is not limited to an articulated robot. As an example, the transfer device 300 may alternatively be a two- or three-axis drive orthogonal robot (autoloader). Alternatively, the transfer device 300 may be a self-propelled robot.

The transfer device 300 includes an arm robot 330, rails 331, and a shuttle 332. The arm robot 330 is fixed to the upper part of the shuttle 332. The shuttle 332 is movable on the rails 331. The tool storage section 250 and the machine tools 400 are arranged with the rails 331 therebetween and parallel with the rails 331.

Each machine tool 400 is one of the transfer destinations, i.e. destinations to which the transfer device 300 transfers a tool holder. FIG. 1 shows six machine tools 400A to 400F as the machine tools 400, but the number of machine tools 400 in the tool transfer system 10 need only be at least one. Each machine tool 400 machines a workpiece in accordance with a pre-designed machining program, using a designated tool.

The term "machine tool" as used herein is a concept that encompasses various devices with a function of machining a workpiece. The machine tool 400 may be a horizontal machining center or a vertical machining center. Alternatively, the machine tool 400 may be a lathe, an additive machine, or any other cutting or grinding machine.

Note that the tool transfer system 10 may also include a pallet transfer system (not shown). A pallet transfer system is a system for transferring pallets each carrying a workpiece to the machine tools 400 in accordance with a predetermined machining schedule. With this, the tool transfer system 10 has not only an automatic tool transfer function but also an automatic workpiece transfer function.

### B. Drive mechanism of tool transfer system 10

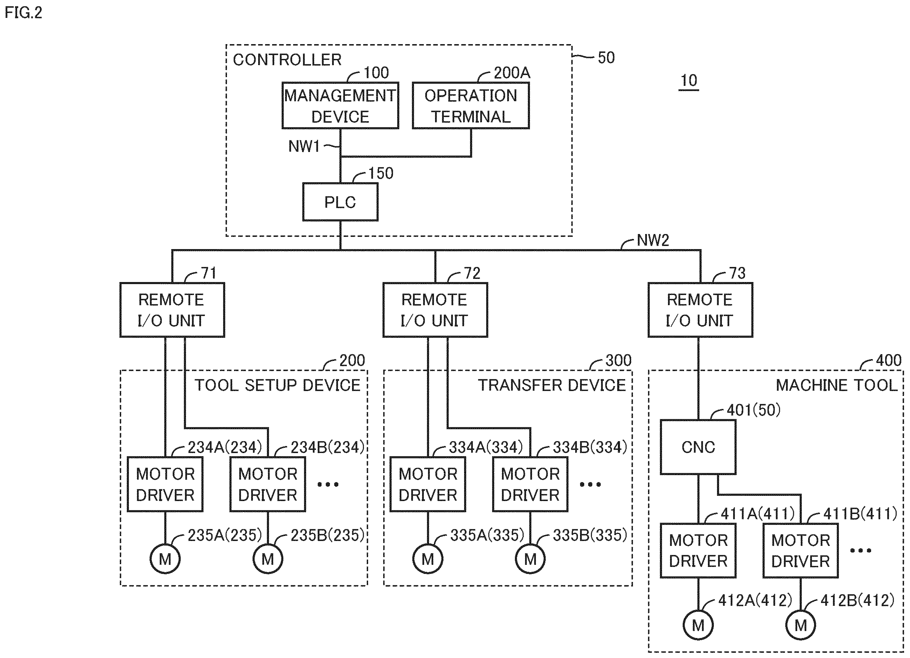

Next, various drive mechanisms in the tool transfer system 10 are described with reference to FIG. 2. FIG. 2 shows a configuration example of drive mechanisms of the tool transfer system 10.

As shown in FIG. 2, the tool transfer system 10 includes a controller 50, a remote I/O (Input/Output) units 71 to 73, the workstation 200, the transfer device 300, and the machine tool 400.

The term "controller 50" as used herein means a device that controls the tool transfer system 10. The controller 50 may have any device configuration. The controller 50 may be constituted by a single control unit or a plurality of control units. In the example in FIG. 2, the controller 50 includes a management device 100, a PLC 150, and the aforementioned operation terminal 200A. The controller 50 may also include a CNC (Computer Numerical Control) 401.

The management device 100 is a main computer that manages the tool transfer system 10. The management device 100 may be constituted by a single computer or a plurality of computers. The PLC 150 can communicate with various industrial devices for automating machining processes, and controls these industrial devices. The operation terminal 200A is a terminal for accepting various operations related to delivery and removal of tool holders.

The management device 100, the PLC 150, and the operation terminal 200A are connected to a network NW1. The management device 100, the PLC 150, and the operation terminal 200A may be communicatively connected by wire or wirelessly. The network NW1 uses EtherNET (registered trademark) or the like. The management device 100 and the operation terminal 200A send a control command to the PLC 150 via the network NW1. The control command specifies a tool holder to be transferred, a transfer destination of the tool holder, start/stop of transfer of the tool holder, or the like.

The remote I/O units 71 to 73 and the PLC 150 are connected to a network NW2. The network NW2 preferably is a field network that performs periodic communication and guarantees the arrival time of data. As a field network that performs such periodic communication, EtherCAT (registered trademark), EtherNet/IP (registered trademark), CC-Link (registered trademark), CompoNet (registered trademark), or the like is adopted.

The workstation 200 includes at least one motor driver 234 and at least one motor 235. FIG. 2 shows an example of two motor drivers 234A and 234B and two motors 235A and 235B.

The remote I/O unit 71 is installed in or around the workstation 200. The remote I/O unit 71 mediates data exchange between the PLC 150 and various drive units (e.g. motor drivers 234) in the workstation 200. As an example, each of the motor drivers 234 receives a control command from the PLC 150 via the remote I/O unit 71 at regular periods and controls driving of a corresponding motor 235 in accordance with the control command.

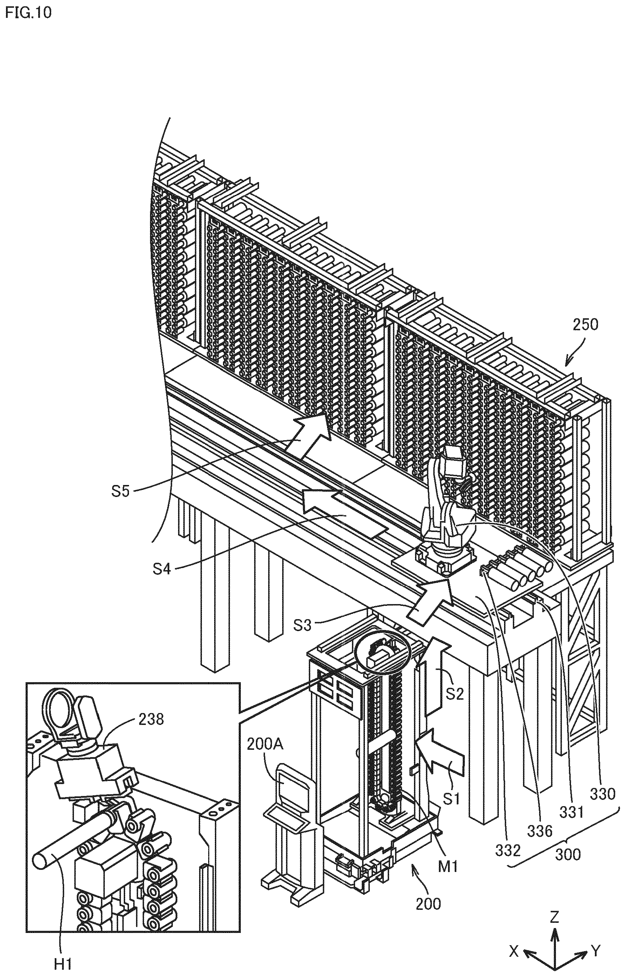

For example, the motor 235A controls driving of a later-described magazine M1 (see FIG. 10), which is located in the workstation 200. For example, the motor 235B controls driving of an ATC (Automatic Train Control) in the workstation 200.

For example, each motor driver 234 may be a driver for a servo motor or a driver for a stepping motor. Each motor 235 may be a servo motor or a stepping motor.

The transfer device 300 includes at least one motor driver 334 and at least one motor 335. FIG. 2 shows an example of two motor drivers 334A and 334B and two motors 335A and 335B.

The remote I/O unit 72 is installed in or around the transfer device 300. The remote I/O unit 72 mediates data exchange between the PLC 150 and various drive units (e.g. motor drivers 334) in the transfer device 300. As an example, each of the motor drivers 334 receives a control command from the PLC 150 via the remote I/O unit 72 at regular periods and controls driving of a corresponding motor 335 in accordance with the control command.

For example, the motor 335A controls driving of the aforementioned shuttle 332 (see FIG. 1). For example, the motor 335B controls driving of the arm robot 330 (see FIG. 1). The number of motors 335B corresponds to the number of joints of the arm robot 330.

For example, each motor driver 334 may be a driver for a servo motor or a driver for a stepping motor. Each motor 335 may be a servo motor or a stepping motor.

The machine tool 400 includes a CNC 401, at least one motor driver 411, and at least one motor 412. FIG. 2 shows an example of two motor drivers 411A and 411B and two motors 412A and 412B.

The remote I/O unit 72 is installed in or around the machine tool 400. The remote I/O unit 72 mediates data exchange between the PLC 150 and various drive units (e.g. CNC 401) in the machine tool 400. Similar to the motor drivers 334, each of the motor drivers 411 receives a control command from the PLC 150 via the remote I/O unit 72 at regular periods and controls driving of a corresponding motor 412 in accordance with the control command.

For example, the motor 412A drives a main shaft, to which a tool can be attached, in an axial direction of the main shaft. For example, the motor 412B drives the main shaft to rotate in a rotational direction about the axial direction of the main shaft.

For example, each motor driver 411 may be a driver for a servo motor or a driver for a stepping motor. Each motor 412 may be a servo motor or a stepping motor.

### C. Summary of removal mode

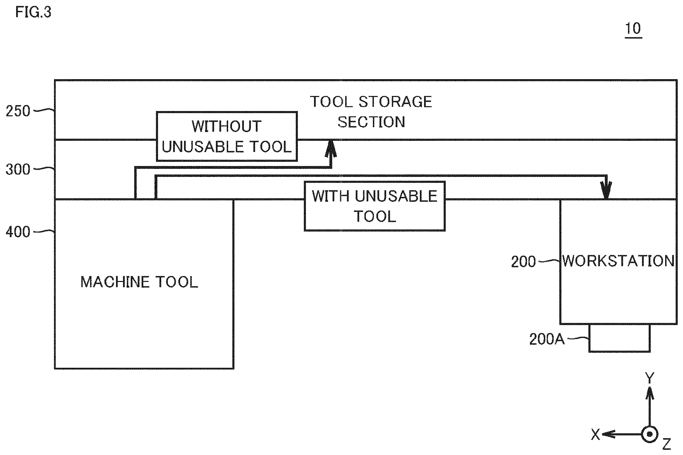

Next, a mode of removing a tool holder is described with reference to FIG. 3. FIG. 3 schematically shows an example of a mode of removing a tool holder in the tool transfer system 10.

The tool transfer system 10 periodically removes tool holders from the machine tool 400. There are cases where tool holders removed from the machine tool 400 include a tool holder holding an unusable tool.

The term "unusable tool" means a tool to be retrieved that is not recommended to be used to machine workpieces. As an example, unusable tools include a tool that has reached the end of the lifespan thereof due to wear or the like, a tool whose remaining lifespan is below a predetermined value, and a damaged tool. Examples of the types of damage to a tool include deformation of the tool due to excessive force applied, a chipped blade of the tool, and breakage of the tool. Meanwhile, the term "usable tool" means a tool other than unusable tools.

If an unusable tool is removed from the machine tool 400 and moved to the tool storage section 250, the storage space for tool holders in the tool storage section 250 will be used wastefully. Therefore, if the controller 50 of the tool transfer system 10 determines that tool holders to be removed from the machine tool 400 include a tool holder holding an unusable tool, the controller 50 controls the transfer device 300 so as to transfer the tool holders to be removed, from the machine tool 400 to the workstation 200. This makes it possible to prevent the storage space for the tool holders in the tool storage section 250 from being used wastefully.

On the other hand, if the controller 50 determines that the tool holders to be removed do not include a tool holder holding an unusable tool, the controller 50 controls the transfer device 300 so as to transfer the tool holders to be removed, from the machine tool 400 to the tool storage section 250. This allows the tool transfer system 10 to store usable tools in the tool storage section 250, making it easier to reuse these tools.

It may be determined, at any timing, whether or not the tool holders to be removed from the machine tool 400 include a tool holder holding an unusable tool. As an example, the determination processing is executed when the tool holders are removed from the machine tool 400. As another example, the determination processing is executed in advance before the tool holders are removed from the machine tool 400.

Although an example of moving removed usable tools to the tool storage section 250 has been described above, usable tools need not necessarily be moved to the tool storage section 250. Depending on the company, a tool is replaced with a new one when the remaining lifespan of the tool has become short. Therefore, if the tool holders to be removed include a tool holder holding a tool whose remaining lifespan is less than a predetermined threshold, the controller 50 may transfer the tool holders to be removed, from the machine tool 400 to the workstation 200. This allows the tool transfer system 10 to retrieve not only unusable tools but also tools that are still usable but not used for some reason.

### D. Functional constituents of tool transfer system 10

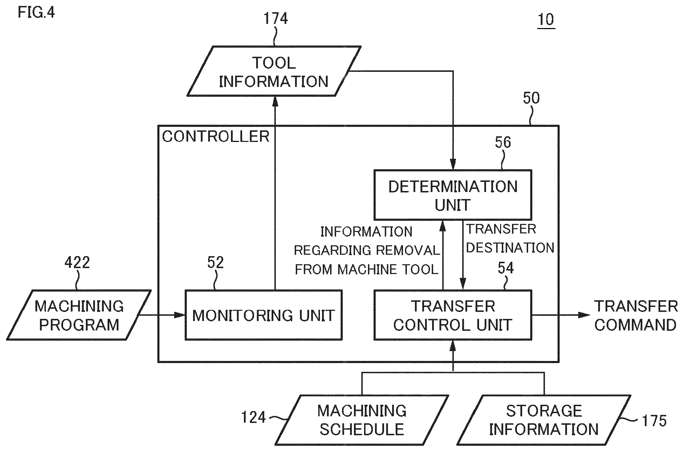

Next, functional constituents for realizing processing to transfer tool holders is described with reference to FIGS. 4 to 7. FIG. 4 shows an example of functional constituents of the tool transfer system 10.

As shown in FIG. 4, the tool transfer system 10 includes, as functional constituents, a monitoring unit 52, a transfer control unit 54, and a determination unit 56. These constituents are described in order below.

Note that the functional constituents may be arranged in any manner. Some or all of the functional constituents shown in FIG. 4 may be implemented in the aforementioned management device 100 (see FIG. 2), the aforementioned PLC 150 (see FIG. 2), the aforementioned operation terminal 200A (see FIG. 2), or the aforementioned CNC 401 (see FIG. 2).

### D1. Monitoring unit 52

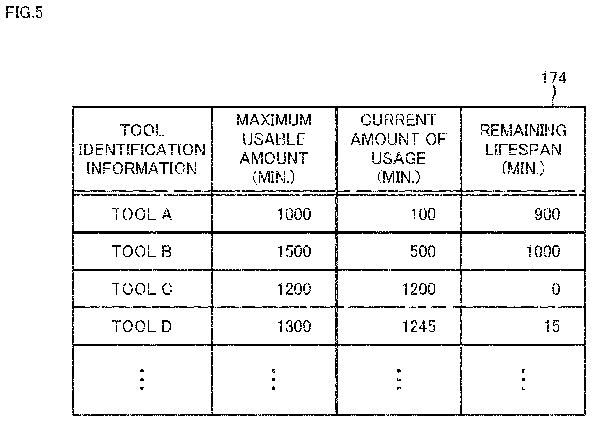

First, a function of the monitoring unit 52 shown in FIG. 4 is described with reference to FIG. 5. FIG. 5 shows an example of a data structure of tool information 174.

The monitoring unit 52 monitors a machining program 422 of the machine tool 400 and counts the amount of usage of each tool in the machine tool 400 from when the tool was new to the present. The term "amount" as used herein is a concept that includes time, distance, and the number of times. The term "amount of usage of a tool" includes, for example, the total time that the tool has been used for machining since when the tool was new to the present, the total distance that the tool has moved during machining since when the tool was new to the present, and the total number of times that the tool has been used since when the tool was new to the present.

The monitoring unit 52 updates the tool information 174 shown in FIG. 5, based on the counted amount of usage. In the tool information 174, the usable time of a tool, the current usage time of the tool, and the remaining lifespan of the tool are associated with each other according to identification information regarding each tool.

The identification information regarding each tool specified in the tool information 174 is information for uniquely identifying the tool. The identification information is assigned to each tool in advance. As an example, the identification information may be indicated by a tool number such as an ID (Identification), or a tool name.

The maximum usable amount specified in the tool information 174 is an indicator of the usable amount of the tool from when the tool was new until the tool reaches the end of the lifespan thereof. The maximum usable amount of each tool is determined in advance by the manufacturer of the tool, or the like.

The current amount of usage specified in the tool information 174 is an indicator of the amount of usage of the tool from when the tool was new to the present. The current amount of usage is updated by the monitoring unit 52.

As an example, the machining program 422 for a workpiece includes a tool replacement command for designating a tool to be attached to the main shaft of the machine tool 400, a drive command for rotating or feeding the main shaft or the tool, or the like. The monitoring unit 52 stores the identification information regarding the tool when the tool replacement command specified in the machining program 422 is executed. Next, the monitoring unit 52 starts counting the amount of usage of the tool based on the drive command specified in the machining program 422 being executed. Next, the monitoring unit 52 stops counting the amount of usage of the tool based on a stop command specified in the machining program 422 or a command in the last line being executed. Next, the monitoring unit 52 references the tool information 174 and adds the counted amount of usage to the current amount of usage associated with the stored identification information. Thus, the monitoring unit 52 updates the current amount of usage of each tool.

The remaining lifespan specified in the tool information 174 is an indicator indicating the amount of usage of the tool from the present until the tool reaches the end of the lifespan. Typically, the remaining lifespan corresponds to the result of subtracting the current amount of usage of the tool from the maximum amount of usage of the tool. When updating the current amount of usage specified in the tool information 174, the monitoring unit 52 also updates the remaining lifespan.

### D2. Transfer control unit 54

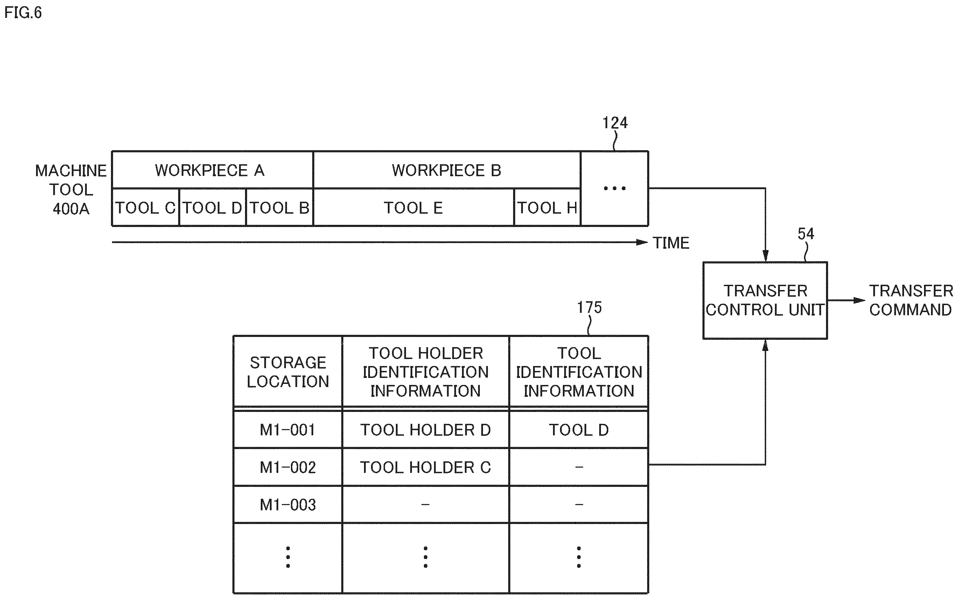

Next, a function of the transfer control unit 54 shown in FIG. 4 is described with reference to FIG. 6. FIG. 6 shows an example of input to the transfer control unit 54 and output of the transfer control unit 54 in response to the input.

As an example, the transfer control unit 54 receives a machining schedule 124 and storage information 175 as input, and outputs a command to transfer a tool holder to the transfer device 300.

The machining schedule 124 specifies, for example, a scheduled machining timing for each workpiece in each of the machine tools 400, and tools used in each machining process. FIG. 6 shows an example of the machining schedule 124 for the machine tool 400A.

The storage information 175 associates identification information regarding a tool holder stored at a storage location and identification information regarding a tool held by this tool holder with each other according to each of the storage locations where tool holders are stored in the tool transfer system 10.

The storage locations specified in the storage information 175 are information for uniquely identifying the location of each tool holder in the tool transfer system 10. As an example, each storage location indicates any of the storage location of a tool holder in the workstation 200, a storage location of the tool holder in the tool storage section 250, the storage location of a tool holder in the transfer device 300, and the storage location of a tool holder in the machine tool 400.

The identification information regarding each tool holder specified in the storage information 175 is information for uniquely identifying the tool holder. The identification information is assigned to each tool holder in advance. The identification information may be indicated by a tool holder number such as an ID, or a tool holder name.

The identification information regarding each tool specified in the storage information 175 is information for uniquely identifying the tool. The identification information is assigned to each tool in advance. The identification information may be indicated by a tool number such as an ID, or a tool name. The identification information corresponds to the identification information regarding the tool specified in the aforementioned tool information 174 (see FIG. 5).

The transfer control unit 54 references the machining schedule 124 and identifies the tool to be used before the machine tool 400 starts machining a workpiece. Next, the transfer control unit 54 references the storage information 175, and if the tool to be used is not present in the target machine tool 400, the transfer control unit 54 causes the transfer device 300 to deliver the tool to be used from the workstation 200 or the tool storage section 250 to the target machine tool 400.

Also, the transfer control unit 54 causes the transfer device 300 to periodically remove tool holders in the machine tool 400. The identification information regarding the tool held by each tool holder to be removed is output to the determination unit 56. In a certain aspect, the tool holder to be removed from the machine tool 400 is randomly determined. In another aspect, the tool holder to be removed from the machine tool 400 is determined in accordance with predetermined rules.

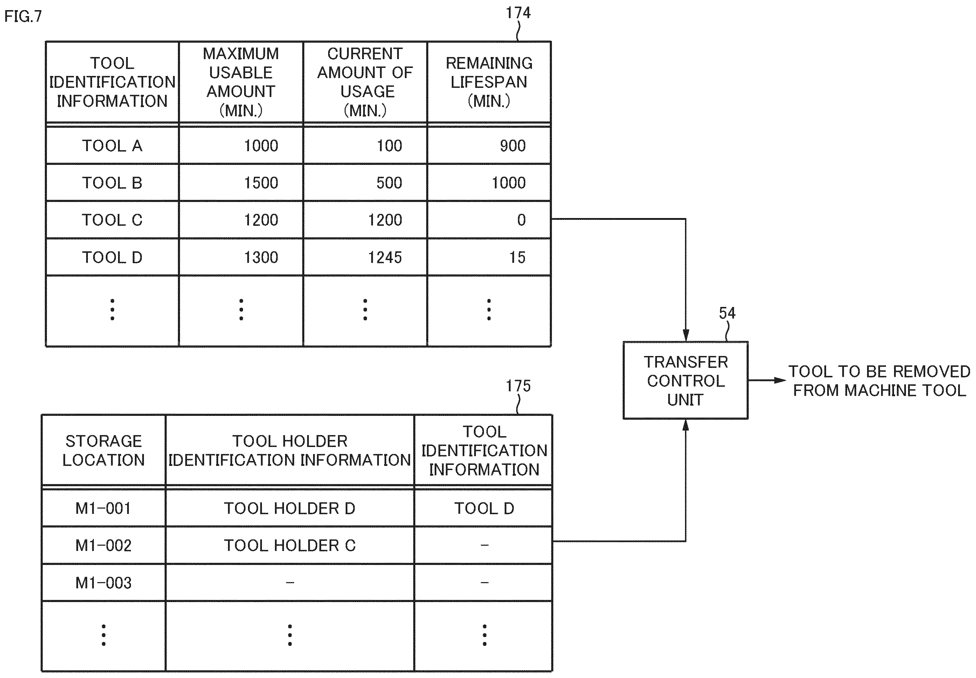

An example of a method of determining the tool holder to be removed from the machine tool 400 in accordance with predetermined rules is described with reference to FIG. 7. FIG. 7 shows an example of input to the transfer control unit 54 and output of the transfer control unit 54 in response to the input.

As an example, the transfer control unit 54 determines the tool holder to be removed from the machine tool 400 based on the remaining lifespan of the tool. Here, the transfer control unit 54 preferentially determines a tool holder holding an unusable tool over a tool holder holding a usable tool as the tool holder to be removed from the machine tool 400.

The tool holder to be removed is determined, for example, based on the aforementioned tool information 174 and the aforementioned storage information 175. More specifically, the transfer control unit 54 references the storage information 175 and identifies tools that are held by the target machine tool 400. Next, the transfer control unit 54 acquires the remaining lifespan of each of the identified tools from the tool information 174. Subsequently, the transfer control unit 54 identifies a tool whose remaining lifespan is shorter among the tools that are held by the target machine tool 400. Thereafter, the transfer control unit 54 determines the tool holder holding the identified tool as a tool holder to be removed from the machine tool 400. Thus, unusable tools are preferentially removed from the machine tool 400 over usable tools.

The unusable tool removed from the machine tool 400 is transferred to the workstation 200 instead of the tool storage section 250. Thus, the worker can retrieve the unusable tool at the workstation 200. Further, the transfer control unit 54 can prevent the storage space for tool holders from being wastefully used in the tool storage section 250.

### D3. Determination unit 56

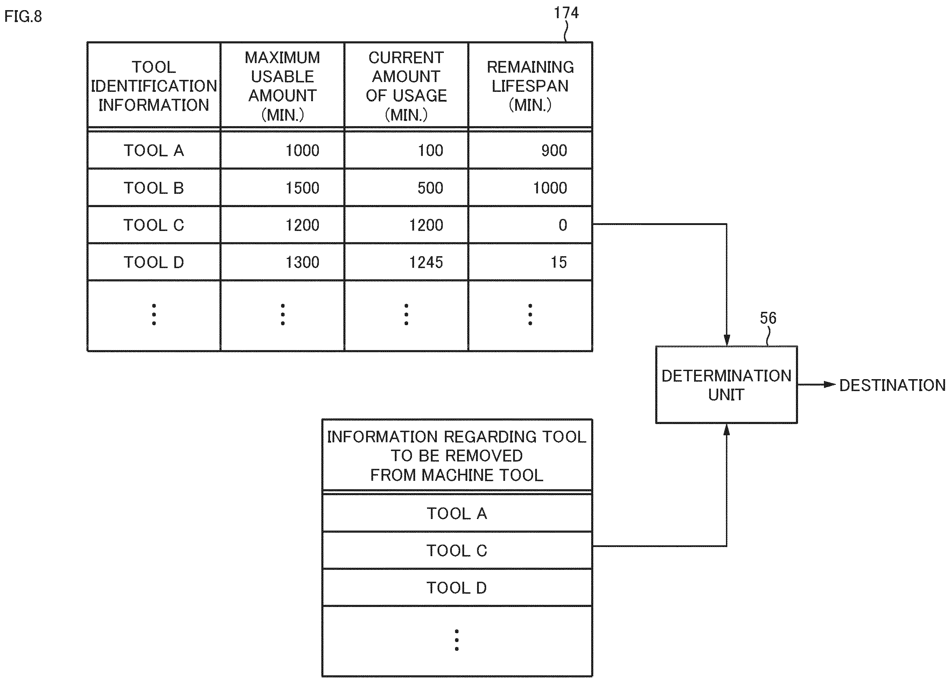

Next, a function of the determination unit 56 shown in FIG. 4 is described with reference to FIG. 8. FIG. 8 shows an example of input to the determination unit 56 and output of the determination unit 56 in response to the input.

The determination unit 56 receives as input the aforementioned tool information 174 and identification information regarding each tool to be removed from the machine tool 400, and outputs the destination of the tool. The destination can be changed depending on whether or not tools to be removed from the machine tool 400 include an unusable tool.

More specifically, the determination unit 56 references the tool information 174 and identifies the remaining lifespan of each tool to be removed from the machine tool 400. Here, the determination unit 56 determines that a tool whose remaining lifespan is less than or equal to a predetermined threshold is an unusable tool.

If the determination unit 56 determines that tools to be removed from the machine tool 400 include at least one unusable tool, the determination unit 56 sets the workstation 200 as the destination of these tools to be removed. On the other hand, if the determination unit 56 determines that all of the tools to be removed from the machine tool 400 are usable, the determination unit 56 sets the tool storage section 250 as the destination of the tools to be removed. The destination is output to the aforementioned transfer control unit 54.

### E. Transfer order of tool holders

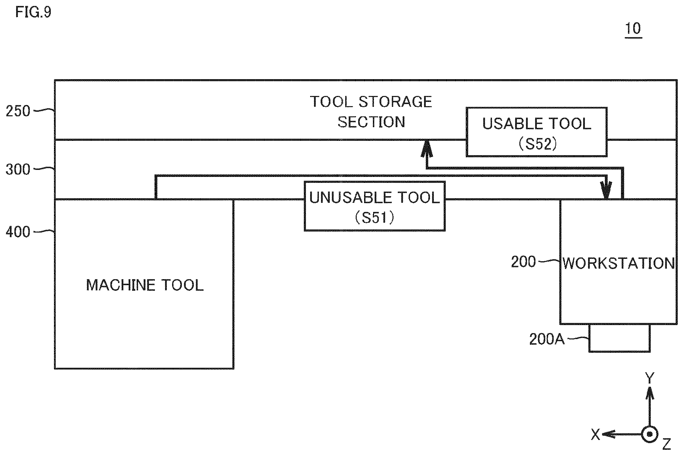

Next, the transfer order of tool holders when unusable and usable tools are removed at the same time from the machine tool 400 is described with reference to FIG. 9. FIG. 9 schematically shows an example of a mode of removing tool holders in the tool transfer system 10.

The transfer device 300 can hold a plurality of tool holders. Therefore, there are cases where the transfer device 300 transfers a tool holder holding an unusable tool and a tool holder holding a usable tool at the same time from the machine tool 400. In this case, first, the aforementioned transfer control unit 54 moves the transfer device 300 from the machine tool 400 to the workstation 200 while causing the transfer device 300 to hold the unusable tool and the usable tool (see step S51). Thereafter, the transfer control unit 54 moves only the tool holder holding the unusable tool to the workstation 200.

Subsequently, the transfer control unit 54 moves the transfer device 300 from the workstation 200 from the machine tool 400 to the workstation 200 while causing the transfer device 300 to hold the usable tool (see step S52). Thereafter, the transfer control unit 54 stores the tool holder holding the usable tool in the tool storage section 250.

As described above, if tool holders to be removed from the machine tool 400 include a tool holder holding an unusable tool and a tool holder holding a usable tool, the transfer control unit 54 controls the transfer device 300 so as to first transfer the tool holder holding the unusable tool to the workstation 200 and thereafter transfer the tool holder holding the usable tool to the tool storage section 250. This makes it easier for the tool transfer system 10 to deliver the usable tool again to the machine tool 400 while securing vacant space for storing tool holders in the tool storage section 250.

Note that, when the tool holders to be removed are moved from the machine tool 400 to the workstation 200 in step S51, there may be cases where there is no vacancy in the storage space for tool holders in the workstation 200. In this case, the transfer control unit 54 controls the transfer device 300 so as to first transfer, from the workstation 200, a tool holder holding a new tool among the tool holders stored in the workstation 200. Thus, the transfer control unit 54 can secure vacant storage space for tool holders in the workstation 200, and can also deliver a new tool.

More specifically, the transfer control unit 54 references the aforementioned storage information 175 and identifies the tools held by the workstation 200. Next, the transfer control unit 54 references the aforementioned tool information 174 and acquires the remaining lifespan of each of the identified tools. Subsequently, the transfer control unit 54 identifies a tool whose remaining lifespan is longer among the tools held by the workstation 200. Thereafter, the transfer control unit 54 determines the tool holder holding the identified tool as a target to be delivered from the workstation 200. This allows the transfer control unit 54 to preferentially deliver newer tools from the workstation 200 to the tool storage section 250.

### F. Process of delivering tools to tool storage section 250

Next, a process of delivering a tool holder from the workstation 200 to the tool storage section 250 is described with reference to FIG. 10. FIG. 10 schematically shows a flow of a process of delivering a tool holder from the workstation 200 to the tool storage section 250.

In step S1, the worker sets a tool holder H1 to be delivered to a magazine M1 in the workstation 200. The number of tool holders that can be stored in the workstation 200 is smaller than the number of tool holders that can be stored in the tool storage section 250.

A reader device (not shown) for reading a bar code or a QR code (registered trademark) is provided near the location where the worker sets the tool holder H1 to the magazine M1. The reader device reads a bar code or a QR code attached to the tool holder H1. Identification information regarding the tool holder H1 to be delivered is thus read. After completing the setting of the tool holder H1, the worker performs a completion operation to the operation terminal 200A.

Next, in step S2, the controller 50 controls the motor 235A (see FIG. 2) and drives the magazine M1 in the workstation 200. The controller 50 thus moves the tool holder H1 to be delivered to a predetermined tool replacement position. The ATC 238 is provided near the tool replacement position. The ATC 238 detaches the tool holder H1 at the tool replacement position from the magazine M1 and makes a half turn.

Next, in step S3, the arm robot 330 detaches the tool holder H1 from the ATC 238 and places the tool holder H1 in a temporary storage place 336 on the shuttle 332. If there is another tool holder to be delivered, the process in steps S1 to S3 is repeated as long as the maximum storable number of the temporary storage place 336 is not exceeded.

Next, in step S4, the controller 50 controls the motor 335A to drive the shuttle 332. The controller 50 thus moves the shuttle 332 to an instructed tool delivery position. The tool delivery position is determined based on the aforementioned storage information 175 (see FIG. 6), for example.

The controller 50 references a vacant storage location specified in the storage information 175 and determines the storage destination of the tool holder H1. If there are a plurality of vacant storage locations, the controller 50 may determine, as the storage destination, one storage location randomly selected from among the plurality of vacant storage locations, or determine, as the storage destination, one storage location that is closer to the transfer device 300 and selected from among the plurality of vacant storage locations.

Next, in step S5, the arm robot 330 detaches the tool holder H1 to be delivered from the temporary storage place 336 and stores the tool holder H1 in the determined storage destination. Thereafter, the controller 50 updates the storage information 175 by associating the identification information regarding the tool holder H1 with the corresponding storage location.

If another tool holder to be delivered remains in the temporary storage place 336, the controller 50 repeats the process in steps S4 and S5 until no tool holder is left on the temporary storage place 336.

### G. Process of delivering tools to machine tool 400

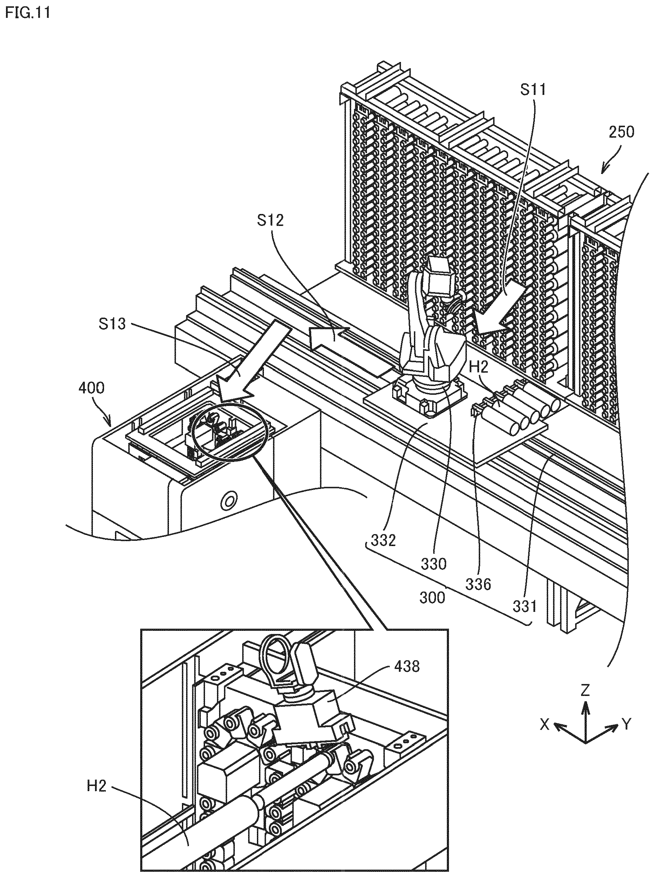

Next, a mode of delivering a tool holder following FIG. 10 is described with reference to FIG. 11. FIG. 11 schematically shows a flow of a process of delivering a tool holder from the tool storage section 250 to the machine tool 400.

It is assumed that at a certain timing the controller 50 receives an instruction to deliver a tool holder to the machine tool 400. For example, the worker designates, on the operation terminal 200A, the tool to be delivered and the machine tool 400 that is the transfer destination. If there are more than one tool holder holding the tool designated by the worker in the tool storage section 250, the controller 50 identifies a tool holder to be delivered. It is assumed that a tool holder H2 is thus identified as a tool to be delivered. In this case, the controller 50 identifies the storage location of the tool holder H2 from the aforementioned storage information 175 (see FIG. 6). Thereafter, the controller 50 drives the shuttle 332 by controlling the motor 335A(see FIG. 2), and moves the shuttle 332 to the front of the storage location of the tool holder H2.

Next, in step S11, the arm robot 330 takes out the tool holder H2 to be delivered from the tool storage section 250 and places the tool holder H2 in the temporary storage place 336 on the shuttle 332.

Next, in step S12, the controller 50 drives the shuttle 332 to the position of the machine tool 400 that is the delivery destination by controlling the motor 335A.

Next, in step S13, the arm robot 330 passes the tool holder H2 to the ATC 438 provided in the machine tool 400 that is the transfer destination. Thereafter, the ATC 438 attaches the tool holder H2 received from the arm robot 330 to the ATC 438 in the machine tool 400. Thereafter, the ATC 438 sets the tool holder H2 to a magazine in the machine tool 400. The tool holder H2 thus becomes available in the machine tool 400.

### H. Process of moving tool to workstation 200

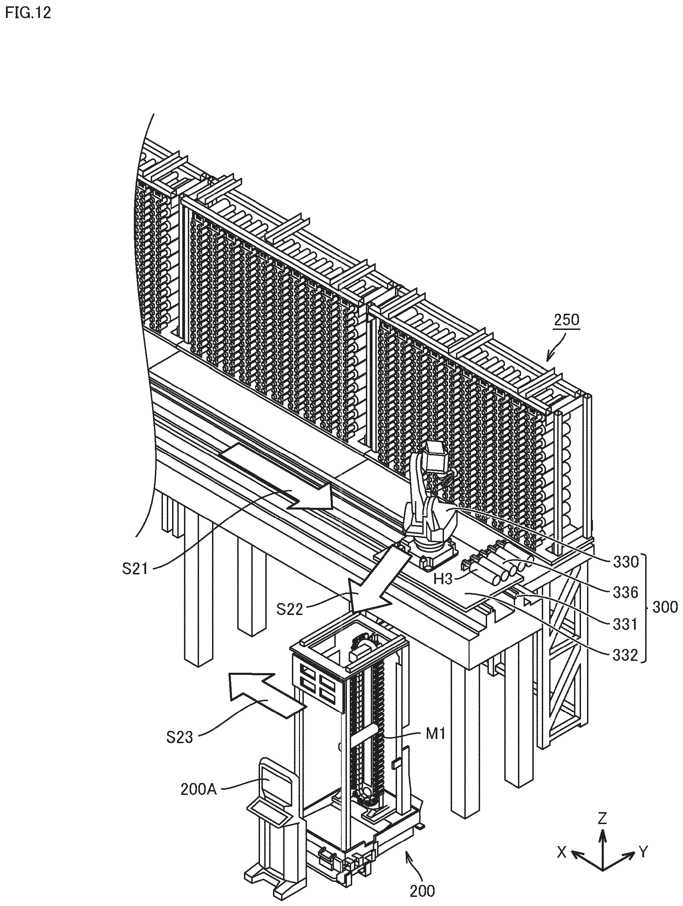

Next, a process of removing a tool holder is described with reference to FIG. 12. FIG. 12 schematically shows a flow of a process of removing a tool holder from the machine tool 400 and moving the removed tool holder to the workstation 200.

It is assumed that at a certain timing the controller 50 receives an instruction to retrieve a tool holder. Based on this, the controller 50 identifies a tool holder to be retrieved from among tool holders stored in the machine tool 400. It is assumed that, as a result, a tool holder H3 is identified as the tool holder to be retrieved. The controller 50 references the aforementioned storage information 175 (see FIG. 6) and identifies a storage destination of the tool holder H3. After that, the controller 50 drives the shuttle 332 by controlling the aforementioned motor 335A (see FIG. 2), and moves the shuttle 332 to the front of the machine tool 400 in which the tool holder H3 is stored. Next, the arm robot 330 takes out the tool holder H3 from the machine tool 400 and places the tool holder H3 in the temporary storage place 336 on the shuttle 332. Further, the controller 50 deletes identification information regarding the tool holder H3 from the storage information 175 and makes empty an entry corresponding to the storage location of the tool holder H3.

Thereafter, the controller 50 determines whether or not tool holders H3 that have been removed from the machine tool 400 include at least one tool holder holding an unusable tool. If the controller 50 determines that the tool holders H3 that have been removed from the machine tool 400 include at least one tool holder holding an unusable tool, the controller 50 sets the workstation 200 as the destination of the tool holders H3.

Next, in step S21, the controller 50 drives the shuttle 332 by controlling the aforementioned motor 335A, and moves the shuttle 332 from the front of the machine tool 400 to the front of the workstation 200.

Next, in step S22, the arm robot 330 detaches each tool holder H3 to be removed from the temporary storage place 336 and attaches the tool holder H3 to the aforementioned ATC 238 (see FIG. 10) in the workstation 200. Thereafter, the ATC 238 attaches the tool holder H3 to the magazine M1 of the workstation 200.

Next, in step S23, the controller 50 drives the magazine M1 by controlling the aforementioned motor 235A, and moves the tool holder H3 to be removed to an exit. Thereafter, the worker takes out the tool holder H3 to be removed from the exit.

### I. Hardware configuration of management device 100

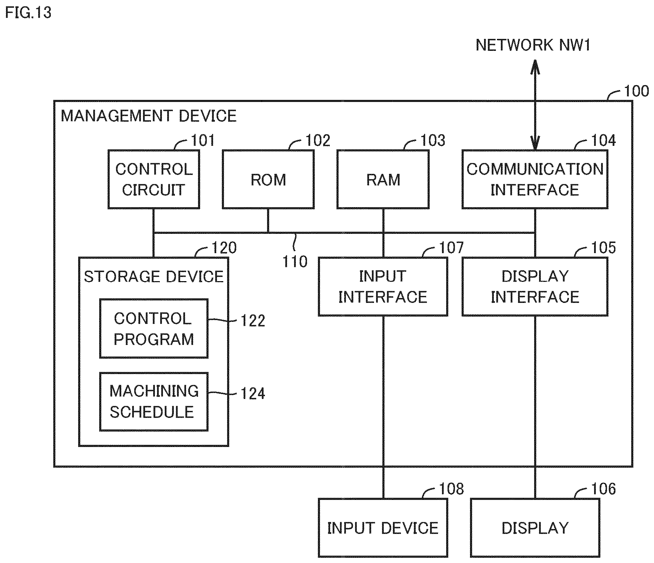

Next, a hardware configuration of the management device 100 shown in FIG. 2 is described with reference to FIG. 13. FIG. 13 is a schematic diagram showing an example of a hardware configuration of the management device 100.

The management device 100 includes a control circuit 101, a ROM (Read Only Memory) 102, a RAM (Random Access Memory) 103, a communication interface 104, a display interface 105, an input interface 107, and a storage device 120. These components are connected to a bus 110.

The control circuit 101 is constituted by at least one integrated circuit, for example. The integrated circuit may be constituted by, for example, at least one CPU (Central Processing Unit), at least one GPU (Graphics Processing Unit), at least one ASIC (Application Specific Integrated Circuit), at least one FPGA (Field Programmable Gate Array), or a combination thereof.

The control circuit 101 controls operation of the management device 100 by executing a control program 122 and various programs, such as an operating system. The control circuit 101 loads the control program 122 from the storage device 120 or the ROM 102 to the RAM 103 in response to receiving a command to execute the control program 122. The RAM 103 functions as a working memory and temporarily stores various data necessary for executing the control program 122.

A LAN (Local Area Network), an antenna, or the like is connected to the communication interface 104. The management device 100 is connected to the network NW1 via the communication interface 104. With this, the management device 100 exchanges data with external devices connected to the network NW1. The external device includes, for example, the PLC 150, a server (not shown), or the like.

A display 106 is connected to the display interface 105. The display interface 105 sends an image signal for displaying an image to the display 106 in accordance with an instruction from the control circuit 101 or the like. The display 106 displays, for example, an operation screen for accepting an instruction to retrieve a tool holder, a selection screen for designating a tool holder to be delivered, or the like. The display 106 is, for example, a liquid crystal display, an organic EL (Electro Luminescence) display, or other display equipment. Note that the display 106 may be integrated with the management device 100, or may be separate from the management device 100.

An input device 108 is connected to the input interface 107. The input device 108 is, for example, a mouse, a keyboard, a touch panel, or other device capable of accepting user operations. Note that the input device 108 may be integrated with the management device 100, or may be separate from the management device 100.

The storage device 120 is, for example, a storage medium such as a hard disk or a flash memory. The storage device 120 stores the control program 122, the aforementioned machining schedule 124, or the like. The storage location of the control program 122 and the machining schedule 124 is not limited to the storage device 120, and may alternatively be stored in a storage area (e.g. cache memory etc.) of the control circuit 101, the ROM 102, the RAM 103, or any other device (e.g. server, PLC 150, or operation terminal 200A).

The control program 122 is a program for realizing some or all of the aforementioned functional constituents shown in FIG. 4. The control program 122 may be provided not as a standalone program but as a part of any program. In this case, transfer control processing based on the control program 122 is realized in cooperation with that program. Even if a program that does not include such a part of a module is used, it does not deviate from the gist of the control program 122 according to this embodiment. Furthermore, some or all of the functions provided by the control program 122 may be realized by dedicated hardware. Furthermore, the management device 100 may be configured in a form such as a so-called cloud service in which at least one server executes a part of processing of the control program 122.

### J. Hardware configuration of PLC 150

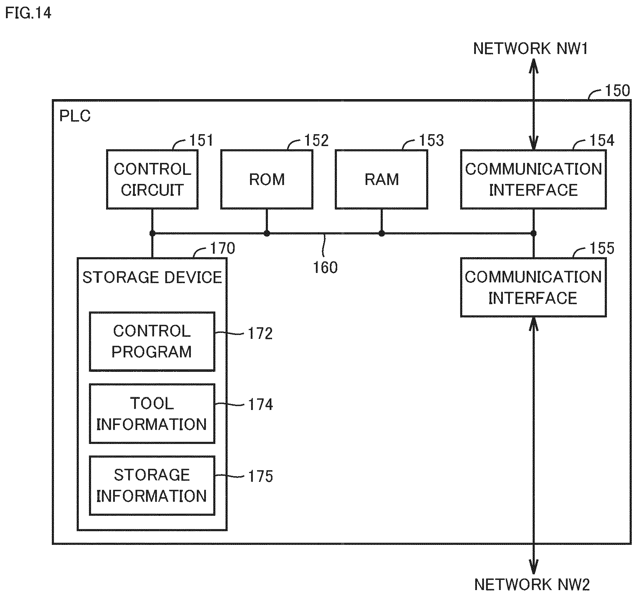

Next, a hardware configuration of the PLC 150 shown in FIG. 2 is described with reference to FIG. 14. FIG. 14 is a block diagram showing a main hardware configuration of the PLC 150.

The PLC 150 includes a control circuit 151, a ROM (Read Only Memory) 152, a RAM (Random Access Memory) 153, communication interfaces 154 and 155, and a storage device 170. These components are connected to a bus 160.

The control circuit 151 is constituted by at least one integrated circuit. The integrated circuit may be constituted by, for example, at least one CPU, at least one MPU (Micro Processing Unit), at least one ASIC (application), at least one FPGA, or a combination thereof.

The control circuit 151 controls operations of the transfer device 300 and the machine tool 400 by executing a control program 172 and various programs. The control circuit 151 loads the control program 172 from the storage device 170 to the RAM 152 in response to receiving a command to execute the control program 172. The RAM 153 functions as a working memory and temporarily stores various data necessary for executing the control program 172.

A LAN, an antenna, or the like is connected to the communication interface 154. The PLC 150 is connected to the network NW1 via the communication interface 154. With this, the PLC 150 exchanges data with an external device connected to the network NW1. The external device includes, for example, the management device 100, a server (not shown), or the like.

The communication unit 155 is a communication interface for connection to the network NW2. The PLC 150 exchanges data with the external device connected to the network NW2 via the communication interface 155. The external device includes, for example, any of the aforementioned remote I/O units 71 to 73.

The storage device 170 is, for example, a storage medium such as a hard disk or a flash memory. The storage device 170 stores the control program 172, the aforementioned tool information 174, the aforementioned storage information 175, or the like. The storage location of the control program 172, the tool information 174, and the storage information 175 is not limited to the storage device 170, and may alternatively be stored in a storage area (e.g. cache memory etc.) of the control circuit 151, the ROM 152, the RAM 153, or any other device (e.g. server).

The control program 172 is a program for realizing some or all of the aforementioned functional constituents shown in FIG. 4. The control program 172 may be provided not as a standalone program but as a part of any program. In this case, control processing according to this embodiment is realized in cooperation with that program. Even if a program that does not include such a part of a module is used, it does not deviate from the gist of the control program 172 according to this embodiment. Furthermore, some or all of the functions provided by the control program 172 may be realized by dedicated hardware. Furthermore, the PLC 150 may be configured in a form such as a so-called cloud service in which at least one the server executes a part of processing of the control program 172.

### K. Hardware configuration of operation terminal 200A

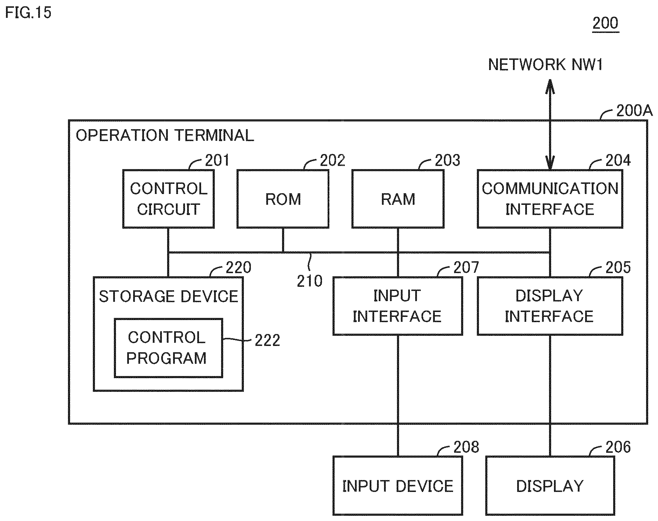

A hardware configuration of the operation terminal 200A shown in FIG. 1 is described with reference to FIG. 15. FIG. 15 is a schematic diagram showing an example of a hardware configuration of the operation terminal 200A.

The operation terminal 200A includes a control circuit 201, a ROM 202, a RAM 203, a communication interface 204, a display interface 205, an input interface 207, and a storage device 220. These components are connected to a bus 210.

The control circuit 201 is constituted by at least one integrated circuit, for example. The integrated circuit may be constituted by, for example, at least one CPU, at least one GPU, at least one ASIC, at least one FPGA, or a combination thereof.

The control circuit 201 controls operations of the operation terminal 200A by executing a control program 222 and various programs such as an operating system. The control circuit 201 loads the control program 222 from the storage device 220 or the ROM 202 to the RAM 203 in response to receiving a command to execute the control program 222. The RAM 203 functions as a working memory and temporarily stores various data necessary for executing the control program 222.

A LAN, an antenna, or the like is connected to the communication interface 204. The operation terminal 200A is connected to the network NW1 via the communication interface 204. With this, the operation terminal 200A exchanges data with an external device connected to the network NW1. The external device includes, for example, the PLC 150, a server (not shown), or the like.

A display 206 is connected to the display interface 205. The display interface 205 sends an image signal for displaying an image to the display 206 in accordance with an instruction from the control circuit 201 or the like. The display 206 displays, for example, an operation screen for accepting an instruction to retrieve a tool holder, a tool selection screen for designating a tool holder to be delivered, a machine tool selection screen for designating a machine tool 400 that is a delivery destination, or the like. The display 206 is, for example, a liquid crystal display, an organic EL display, or other display equipment. Note that the display 206 may be integrated with or separate from the operation terminal 200A.

An input device 208 is connected to the input interface 207. The input device 208 is, for example, a mouse, a keyboard, a touchscreen, or other device capable of accepting user operations. Note that the input device 208 may be integrated with or separate from the operation terminal 200A.

The storage device 220 is, for example, a storage medium such as a hard disk or a flash memory. The storage device 220 stores the control program 222 or the like. The storage location of the control program 222 is not limited to the storage device 220, and may alternatively be stored in a storage area (e.g. cache memory etc.) of the control circuit 201, the ROM 202, the RAM 203, the management device 100, the PLC 150, an external device (e.g. server), or the like.

The control program 222 is a program for realizing some or all of the aforementioned functional constituents shown in FIG. 4. The control program 222 may be provided not as a standalone program but as a part of any program. In this case, control processing based on the control program 222 is realized in cooperation with that program. Even if a program that does not include such a part of a module is used, it does not deviate from the gist of the control program 222 according to this embodiment. Furthermore, some or all of the functions provided by the control program 222 may be realized by dedicated hardware. Furthermore, the operation terminal 200A may be configured in a form such as a so-called cloud service in which at least one server executes a part of processing of the control program 222.

### L. Flow of removing tool holder

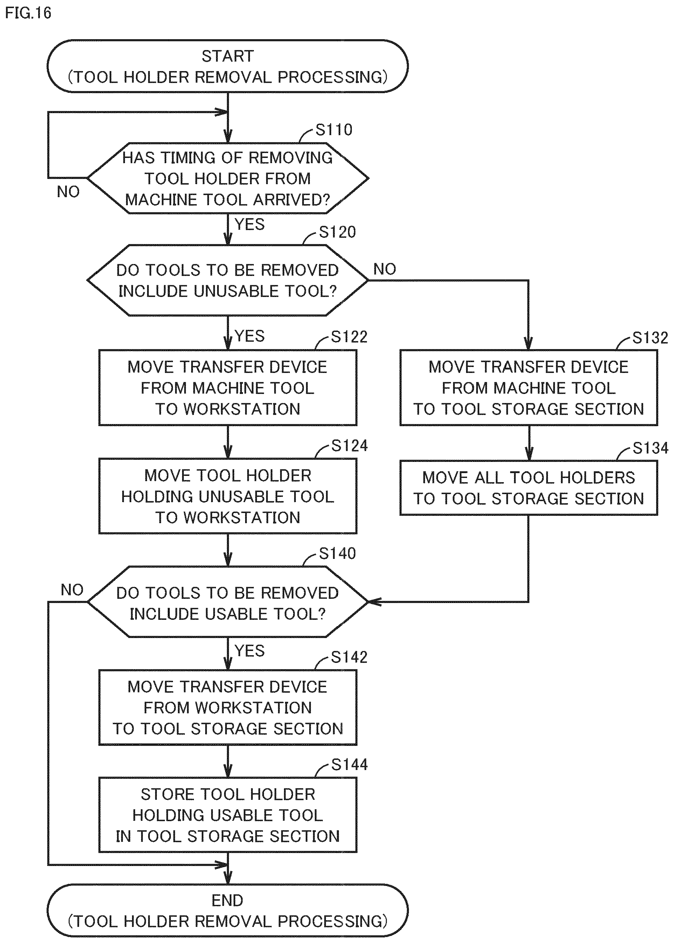

Next, a control flow related to processing for removing a tool holder is described with reference to FIG. 16. FIG. 16 is a flowchart showing a flow of processing to remove a tool holder from the machine tool 400.

Processing shown in FIG. 16 is realized by the controller 50 executing the control program. In another aspect, the processing may be partially or entirely performed by circuit elements or other hardware.

In step S110, the controller 50 determines whether or not the timing to remove tool holders from the machine tool 400 has arrived based on the aforementioned machining schedule 124. If the controller 50 determines that the timing to remove tool holders from the machine tool 400 has arrived (YES in step S110), the controller 50 switches control to step S120. If not (NO in step S110), the controller 50 executes the processing in step S110 again.

In step S120, the controller 50 functions as the aforementioned determination unit 56 and determines whether or not the tools to be removed from the machine tool 400 include an unusable tool. As an example, the controller 50 references the aforementioned tool information 174 and identifies the remaining lifespan of each tool to be removed from the machine tool 400. Here, the controller 50 identifies a tool whose remaining lifespan is less than a predetermined threshold as an unusable tool. The predetermined threshold may be set in advance, or may be any value set by a user. If the controller 50 determines that the tools to be removed from the machine tool 400 include an unusable tool (YES in step S120), the controller 50 switches control to step S122. If not (NO in step S120), the controller 50 switches control to step S132.

In step S122, the controller 50 functions as the aforementioned transfer control unit 54 and moves the transfer device 300 from the front of the machine tool 400 to the front of the workstation 200.

In step S124, the controller 50 functions as the aforementioned transfer control unit 54 and controls the transfer device 300 so as to remove the tool holder holding the unusable tool to the workstation 200.

In step S132, the controller 50 functions as the aforementioned transfer control unit 54 and moves the transfer device 300 from the front of the machine tool 400 to the front of the tool storage section 250.

In step S134, the controller 50 functions as the aforementioned the transfer control unit 54 and controls the transfer device 300 to store all of the tool holders removed from the machine tool 400 in the tool storage section 250.

In step S140, the controller 50 functions as the aforementioned determination unit 56 and determines whether or not the tools to be removed from the machine tool 400 include a usable tool. As an example, the controller 50 references the tool information 174 and identifies the remaining lifespan of each tool to be removed from the machine tool 400. Here, the controller 50 identifies a tool whose remaining lifespan is greater than or equal to a predetermined threshold as an unusable tool. The predetermined threshold may be set in advance, or may be any value set by a user. If the controller 50 determines that the tools to be removed from the machine tool 400 include a usable tool (YES in step S140), the controller 50 switches control to step S142. If not (NO in step S140), the controller 50 ends the processing shown in FIG. 16.

In step S142, the controller 50 functions as the aforementioned transfer control unit 54 and moves the transfer device 300 from the front of the workstation 200 to the front of the tool storage section 250.

In step S144, the controller 50 functions as the aforementioned transfer control unit 54 and controls the transfer device 300 so as to store the tool holder holding the usable tool in the tool storage section 250.

### M. Summary

As described above, the tool transfer system 10 determines whether or not tool holders to be removed from the machine tool 400 include a tool holder holding an unusable tool, and changes the destination of the tool holders based on the determination results.

If the tool holders to be removed include a tool holder holding an unusable tool, the controller 50 controls the transfer device 300 so as to transfer the tool holders to be removed, from the machine tool 400 to the workstation 200. This allows the tool transfer system 10 to prevent storage space for tool holders in the tool storage section 250 from being used wastefully.

On the other hand, if the tool holders to be removed do not include a tool holder holding an unusable tool, the controller 50 controls the transfer device 300 so as to transfer the tool holders to be removed, from the machine tool 400 to the tool storage section 250. This allows the tool transfer system 10 to store usable tools in the tool storage section 250, making it easier to reuse these tools.

The embodiment disclosed herein is illustrative in all respects and should not be considered restrictive. The scope of the present invention is defined by the claims, rather than the above description, and intended to encompass meanings equivalent to the claims and all changes made within the scope of the claims.

### List of Reference Numerals

- 10: Tool transfer system
- 50: Controller
- 52: Monitoring unit
- 54: Transfer control unit
- 56: Determination unit
- 71: Remote I/O unit
- 72: Remote I/O unit
- 73: Remote I/O unit
- 100: Management device
- 101: Control circuit
- 102: ROM
- 103: RAM
- 104: Communication interface
- 105: Display interface
- 106: Display
- 107: Input interface
- 108: Input device
- 110: Bus
- 120: Storage device
- 122: Control program
- 124: Machining schedule
- 151: Control circuit
- 152: ROM
- 153: RAM
- 154: Communication interface
- 155: Communication interface
- 160: Bus
- 170: Storage device
- 172: Control program
- 174: Tool information
- 175: Storage information
- 200: Workstation
- 200A: Operation terminal
- 201: Control circuit
- 202: ROM
- 203: RAM
- 204: Communication interface
- 205: Display interface
- 206: Display
- 207: Input interface
- 208: Input device
- 210: Bus
- 220: Storage device
- 222: Control program
- 234: Motor driver
- 234A: Motor driver
- 234B: Motor driver
- 235: Motor
- 235A: Motor
- 235B: Motor
- 250: Tool storage section
- 300: Transfer device
- 330: Arm robot
- 331: Rail
- 332: Shuttle
- 334: Motor driver
- 334A: Motor driver
- 334B: Motor driver
- 335: Motor
- 335A: Motor
- 335B: Motor
- 336: Temporary storage place
- 400, 400A to 400F: Machine tool
- 411: Motor driver
- 411A: Motor driver
- 411B: Motor driver
- 412: Motor
- 412A: Motor
- 412B: Motor
- 422: Machining program

## Claims

1. A tool transfer system (10) comprising:
a machine tool (400, 400A to 400F);
a tool storage section (250) configured to store a plurality of tool holders, wherein each of the tool holders is configured to hold a tool;
a workstation (200) configured for a worker to perform work for the tool holders;
a transfer device (300) configured for transferring a designated tool holder among a tool holder in the machine tool (400, 400A to 400F), a tool holder in the tool storage section (250), and a tool holder in the workstation (200), to a designated transfer destination, which is one of the machine tool (400, 400A to 400F), the tool storage section (250), and the workstation (200); and
a controller (50) for controlling the tool transfer system (10),
the tool transfer system (10) being **characterised in that** the controller (50) is configured to execute:
processing for determining whether or not a tool holder to be removed from the machine tool (400, 400A to 400F) includes a tool holder holding an unusable tool; and
processing for controlling the transfer device (300) so as to transfer the tool holder to be removed, from the machine tool (400, 400A to 400F) to the workstation (200) if the tool holder to be removed includes a tool holder holding an unusable tool.

2. The tool transfer system (10) according to claim 1,
wherein the controller (50) is further configured to execute processing for controlling the transfer device (300) so as to transfer the tool holder to be removed, from the machine tool (400, 400A to 400F) to the tool storage section (250) if the tool holder to be removed does not include a tool holder holding an unusable tool.

3. The tool transfer system (10) according to claim 1 or 2,
wherein the controller (50) is further configured to execute processing for determining the tool holder to be removed out of a plurality of tool holders that are held by the machine tool (400, 400A to 400F), and
in the determining processing, a tool holder holding an unusable tool is preferentially determined as the tool holder to be removed over a tool holder holding a usable tool.

4. The tool transfer system (10) according to any one of claims 1 to 3,
wherein, the controller is configured to determine if a tool holder to be removed includes a tool holder holding an unusable tool and a tool holder holding a usable tool, the controller (50) is further configured to execute processing for controlling the transfer device (300) so as to transfer the tool holder holding the unusable tool to the workstation (200) and thereafter transferring the tool holder holding the usable tool to the tool storage section (250).

5. The tool transfer system (10) according to any one of claims 1 to 4,
wherein the plurality of tool holders are configured to be stored in the workstation (200), and
the workstation (200) is configured to store a smaller number of tool holders than the tool storage section (250).

6. The tool transfer system (10) according to claim 5,
wherein the controller is configured to determine if a tool holder holding an unusable tool has been transferred from the machine tool (400, 400A to 400F) to the workstation (200), and there is no vacant tool holder storage space in the workstation (200), the controller (50) is further configured to execute processing for controlling the transfer device (300) so as to remove, from the workstation (200), a tool holder holding a new tool among tool holders stored in the workstation (200).

7. A control method for a tool transfer system (10),
the tool transfer system (10) including:
a machine tool (400, 400A to 400F);
a tool storage section (250) in which a plurality of tool holders are able to be stored, each of the tool holders being capable of holding a tool;
a workstation (200) for a worker to perform work for the tool holders; and
a transfer device (300) for transferring a designated tool holder among a tool holder in the machine tool (400, 400A to 400F), a tool holder in the tool storage section (250), and a tool holder in the workstation (200), to a designated transfer destination, which is one of the machine tool (400, 400A to 400F), the tool storage section (250), and the workstation (200),
the control method being **characterised in that** it comprises:
a step of determining whether or not a tool holder to be removed from the machine tool (400, 400A to 400F) includes a tool holder holding an unusable tool; and
a step of controlling the transfer device (300) so as to transfer the tool holder to be removed, from the machine tool (400, 400A to 400F) to the workstation (200) if the tool holder to be removed includes a tool holder holding an unusable tool.

8. A control program (122) for a tool transfer system (10),
the tool transfer system (10) including:
a machine tool (400, 400A to 400F);
a tool storage section (250) in which a plurality of tool holders are able to be stored, each of the tool holders being capable of holding a tool;
a workstation (200) for a worker to perform work for the tool holders; and
a transfer device (300) for transferring a designated tool holder among a tool holder in the machine tool (400, 400A to 400F), a tool holder in the tool storage section (250), and a tool holder in the workstation (200), to a designated transfer destination, which is one of the machine tool (400, 400A to 400F), the tool storage section (250), and the workstation (200),
the control program (122) being charactering in that it causes the tool transfer system (10) to execute:
a step of determining whether or not a tool holder to be removed from the machine tool (400, 400A to 400F) includes a tool holder holding an unusable tool; and
a step of controlling the transfer device (300) so as to transfer the tool holder to be removed, from the machine tool (400, 400A to 400F) to the workstation (200) if the tool holder to be removed includes a tool holder holding an unusable tool.

## Patentansprüche

1. Ein Werkzeugtransportsystem (10) umfassend:
ein Maschinenwerkzeug (400, 400A bis 400F);
einen Lagerabschnitt (250), der konfiguriert ist eine Vielzahl von Werkzeughaltern zu lagern, wobei jeder der Werkzeughalter konfiguriert ist ein Werkzeug zu halten;
eine Arbeitsstation (200), die konfiguriert ist, dass ein Arbeiter Arbeiten an den Werkzeughaltern ausführen kann;
eine Transfervorrichtung (300), die konfiguriert ist, einen bestimmten Werkzeughalter zwischen einem Werkzeughalter im Maschinenwerkzeug (400, 400A bis 400F), einem Werkzeughalter im Lagerabschnitt (250) und einem Werkzeughalter in der Arbeitsstation (200) an einen bestimmten Transferzielort zu übertragen, der entweder das Maschinenwerkzeug (400, 400A bis 400F), der Lagerabschnitt (250) oder die Arbeitsstation (200) ist; und
eine Steuerung (50) zum Steuern des Werkzeugtransportsystems (10), wobei
das Werkzeugtransportsystem (10) **dadurch gekennzeichnet ist, dass** die Steuerung (50) konfiguriert ist, Folgendes auszuführen:
einen Bestimmungsprozess, ob ein aus dem Maschinenwerkzeug (400, 400A bis 400F) zu entfernender Werkzeughalter einen Werkzeughalter enthält, der ein unbrauchbares Werkzeug hält; und
einen Steuerungsprozess der Transfervorrichtung (300), um den zu entfernenden Werkzeughalter vom Maschinenwerkzeug (400, 400A bis 400F) zur Arbeitsstation (200) zu transferieren, wenn der zu entfernende Werkzeughalter einen Werkzeughalter enthält, der ein unbrauchbares Werkzeug hält.

2. Das Werkzeugtransportsystem (10) gemäß Anspruch 1, wobei
die Steuerung (50) ferner konfiguriert ist, einen Steuerungsprozess der Transfervorrichtung (300) auszuführen, um den zu entfernenden Werkzeughalter von dem Maschinenwerkzeug (400, 400A bis 400F) zum Lagerabschnitt (250) zu transferieren, wenn der zu entfernende Werkzeughalter keinen Werkzeughalter enthält, der ein unbrauchbares Werkzeug hält.

3. Das Werkzeugtransportsystem (10) gemäß Anspruch 1 oder 2, wobei
die Steuerung (50) ferner konfiguriert ist, einen Bestimmungsprozess des zu entfernenden Werkzeughalters aus einer Vielzahl von Werkzeughaltern, die vom Maschinenwerkzeug (400, 400A bis 400F) gehalten werden, auszuführen, und wobei
in dem Bestimmungsprozess ein Werkzeughalter, der ein unbrauchbares Werkzeug hält, gegenüber einem Werkzeughalter, der ein brauchbares Werkzeug hält, bevorzugt als der zu entfernende Werkzeughalter bestimmt wird.

4. Das Werkzeugtransportsystem (10) gemäß einem der Ansprüche 1 bis 3, wobei
die Steuerung (50) konfiguriert ist, zu bestimmen, ob ein zu entfernender Werkzeughalter einen Werkzeughalter, der ein unbrauchbares Werkzeug hält, und einen Werkzeughalter, der ein brauchbares Werkzeug hält, umfasst, wobei die Steuerung (50) ferner konfiguriert ist, einen Steuerungsprozess der Transfervorrichtung (300) auszuführen, um den Werkzeughalter, der das unbrauchbare Werkzeug hält, zur Arbeitsstation (200) zu übertragen und anschließend den Werkzeughalter, der das brauchbare Werkzeug hält, zum Lagerabschnitt (250) zu übertragen.

5. Das Werkzeugtransportsystem (10) gemäß einem der Ansprüche 1 bis 4, wobei
die mehreren Werkzeughalter konfiguriert sind, in der Arbeitsstation (200) gelagert zu werden, und
die Arbeitsstation (200) konfiguriert ist, eine geringere Anzahl von Werkzeughaltern als den Lagerabschnitt (250) aufnehmen zu können.

6. Das Werkzeugtransportsystem (10) gemäß Anspruch 5, wobei
die Steuerung konfiguriert ist, festzustellen, ob ein Werkzeughalter, der ein unbrauchbares Werkzeug hält, vom Maschinenwerkzeug (400, 400A bis 400F) zur Arbeitsstation (200) übertragen wurde und kein freier Werkzeughalter-Lagerplatz in der Arbeitsstation (200) vorhanden ist, wobei die Steuerung (50) ferner konfiguriert ist, einen Steuerungsprozess der Transfervorrichtung (300) auszuführen, um einen Werkzeughalter, der ein neues Werkzeug hält, aus den in der Arbeitsstation (200) gelagerten Werkzeughaltern aus der Arbeitsstation (200) zu entfernen.

7. Ein Steuerungsverfahren für ein Werkzeugtransportsystem (10), wobei
das Werkzeugtransportsystem (10) umfasst:
ein Maschinenwerkzeug (400, 400A bis 400F);
einen Lagerabschnitt (250), in dem mehrere Werkzeughalter gelagert werden können, wobei jeder der Werkzeughalter ein Werkzeug aufnehmen kann;
eine Arbeitsstation (200), an der ein Arbeiter Arbeiten an den Werkzeughaltern ausführen kann; und
eine Transfervorrichtung (300) zum Transferieren eines bestimmten Werkzeughalters zwischen einem Werkzeughalter im Maschinenwerkzeug (400, 400A bis 400F), einem Werkzeughalter im Lagerabschnitt (250) und einem Werkzeughalter in der Arbeitsstation (200) zu einem bestimmten Transferziel, das entweder das Maschinenwerkzeug (400, 400A bis 400F), der Lagerabschnitt (250) oder die Arbeitsstation (200) ist, wobei
das Steuerungsverfahren **dadurch gekennzeichnet ist, dass** es umfasst:
einen Schritt zum Bestimmen, ob ein aus dem Maschinenwerkzeug (400, 400A bis 400F) zu entfernender Werkzeughalter einen Werkzeughalter enthält, der ein unbrauchbares Werkzeug hält; und
einen Schritt zum Steuern der Transfervorrichtung (300), um den zu entfernenden Werkzeughalter vom Maschinenwerkzeug (400, 400A bis 400F) zur Arbeitsstation (200) zu transferieren, wenn der zu entfernende Werkzeughalter einen Werkzeughalter enthält, der ein unbrauchbares Werkzeug hält.

8. Ein Steuerungsprogramm (122) für ein Werkzeugtransportsystem (10), wobei
das Werkzeugtransportsystem (10) umfasst:
ein Maschinenwerkzeug (400, 400A bis 400F);
einen Lagerabschnitt (250), in dem mehrere Werkzeughalter gelagert werden können, wobei jeder der Werkzeughalter ein Werkzeug halten kann;
eine Arbeitsstation (200), an der ein Arbeiter Arbeiten an den Werkzeughaltern ausführen kann; und
eine Transfervorrichtung (300) zum Transferieren eines bestimmten Werkzeughalters zwischen einem Werkzeughalter im Maschinenwerkzeug (400, 400A bis 400F), einem Werkzeughalter im Lagerabschnitt (250) und einem Werkzeughalter in der Arbeitsstation (200) zu einem bestimmten Transferziel, das entweder das Maschinenwerkzeug (400, 400A bis 400F), der Lagerabschnitt (250) oder die Arbeitsstation (200) ist, wobei
das Steuerungsprogramm (122) **dadurch gekennzeichnet ist, dass** es das Werkzeugtransportsystem (10) veranlasst, Folgendes auszuführen:
einen Schritt zum Bestimmen, ob ein aus dem Maschinenwerkzeug (400, 400A bis 400F) zu entfernender Werkzeughalter einen Werkzeughalter enthält, der ein unbrauchbares Werkzeug hält; und
einen Schritt zum Steuern der Transfervorrichtung (300), um den zu entfernenden Werkzeughalter vom Maschinenwerkzeug (400, 400A bis 400F) zur Arbeitsstation (200) zu transferieren, wenn der zu entfernende Werkzeughalter einen Werkzeughalter enthält, der ein unbrauchbares Werkzeug hält.

## Revendications

1. Système de transfert d'outil (10) comprenant :
une machine-outil (400, 400A à 400F) ;
une section de stockage d'outils (250) configurée pour stocker une pluralité de porte-outils, dans lequel chacun des porte-outils est configuré pour porter un outil ;
un poste de travail (200) configuré pour qu'un opérateur effectue un travail sur les porte-outils
un dispositif de transfert (300) configuré pour transférer un porte-outil désigné parmi un porte-outil dans la machine-outil (400, 400A à 400F), un porte-outil dans la section de stockage d'outils (250) et un porte-outil dans le poste de travail (200), vers une destination de transfert désignée, qui est l'un parmi la machine-outil (400, 400A à 400F), la section de stockage d'outils (250) et le poste de travail (200) ; et
un dispositif de commande (50) pour commander le système de transfert d'outils (10),
le système de transfert d'outils (10) étant **caractérisé en ce que** le dispositif de commande (50) est configuré pour exécuter :
un traitement pour déterminer si un porte-outil à retirer de la machine-outil (400, 400A à 400F) comporte ou non un porte-outil portant un outil inutilisable ; et
un traitement pour commander le dispositif de transfert (300) de manière à transférer le porte-outil à retirer, depuis la machine-outil (400, 400A à 400F) vers le poste de travail (200) si le porte-outil à retirer comporte un porte-outil portant un outil inutilisable.

2. Système de transfert d'outil (10) selon la revendication 1,
dans lequel le dispositif de commande (50) est configuré en outre pour exécuter un traitement pour commander le dispositif de transfert (300) de manière à transférer le porte-outil à retirer, depuis la machine-outil (400, 400A à 400F) vers la section de stockage d'outils (250) si le porte-outil à retirer ne comporte pas de porte-outil portant un outil inutilisable.

3. Système de transfert d'outil (10) selon la revendication 1 ou 2,
dans lequel le dispositif de commande (50) est configuré en outre pour exécuter un traitement pour déterminer le porte-outil à retirer parmi une pluralité de porte-outils qui sont portés par la machine-outil (400, 400A à 400F), et
lors du traitement de détermination, un porte-outil portant un outil inutilisable est déterminé de manière préférentielle en tant que porte-outil à retirer par rapport à un porte-outil portant un outil utilisable.

4. Système de transfert d'outil (10) selon l'une quelconque des revendications 1 à 3, dans lequel, le dispositif de commande (50) est configuré pour déterminer si un porte-outil à retirer comporte un porte-outil portant un outil inutilisable et un porte-outil portant un outil utilisable, le dispositif de commande (50) est configuré en outre pour exécuter un traitement pour commander le dispositif de transfert (300) de manière à transférer le porte-outil portant l'outil inutilisable vers le poste de travail (200) et, ensuite, à transférer le porte-outil portant l'outil utilisable vers la section de stockage d'outils (250).

5. Système de transfert d'outil (10) selon l'une quelconque des revendications 1 à 4,
dans lequel la pluralité de porte-outils sont configurés pour être stockés dans le poste de travail (200), et
le poste de travail (200) est configuré pour stocker un nombre de porte-outils plus petit que la section de stockage d'outils (250).

6. Système de transfert d'outil (10) selon la revendication 5,
dans lequel le dispositif de commande (50) est configuré pour déterminer si un porte-outil portant un outil inutilisable a été transféré depuis la machine-outil (400, 400A à 400F) vers le poste de travail (200), et qu'il n'existe aucun emplacement de stockage de porte-outils vacant dans le poste de travail (200), le dispositif de commande (50) est configuré en outre pour exécuter un traitement pour commander le dispositif de transfert (300) de manière à retirer, du poste de travail (200), un porte-outil portant un nouvel outil parmi des porte-outils stockés dans le poste de travail (200).

7. Procédé de commande d'un système de transfert d'outil (10),
le système de transfert d'outil (10) comportant :
une machine-outil (400, 400A à 400F) ;
une section de stockage d'outils (250) dans laquelle une pluralité de porte-outils peuvent être stockés, chacun des porte-outils étant capable de porter un outil ;
un poste de travail (200) pour qu'un opérateur effectue un travail sur les porte-outils ; et
un dispositif de transfert (300) pour transférer un porte-outil désigné parmi un porte-outil dans la machine-outil (400, 400A à 400F), un porte-outil dans la section de stockage d'outils (250) et un porte-outil dans le poste de travail (200), vers une destination de transfert désignée, qui est l'un parmi la machine-outil (400, 400A à 400F), la section de stockage d'outils (250) et le poste de travail (200),
le procédé de commande étant **caractérisé en ce qu'**il comprend :
une étape consistant à déterminer si un porte-outil à retirer de la machine-outil (400, 400A à 400F) comporte ou non un porte-outil portant un outil inutilisable ; et
une étape consistant à commander le dispositif de transfert (300) de manière à transférer le porte-outil à retirer, depuis la machine-outil (400, 400A à 400F) vers le poste de travail (200) si le porte-outil à retirer comporte un porte-outil portant un outil inutilisable.

8. Programme de commande (122) pour un système de transfert d'outil (10),
le système de transfert d'outil (10) comportant :
une machine-outil (400, 400A à 400F) ;
une section de stockage d'outils (250) dans laquelle une pluralité de porte-outils peuvent être stockés, chacun des porte-outils étant capable de porter un outil ;
un poste de travail (200) pour qu'un opérateur effectue un travail sur les porte-outils ; et
un dispositif de transfert (300) pour transférer un porte-outil désigné parmi un porte-outil dans la machine-outil (400, 400A à 400F), un porte-outil dans la section de stockage d'outils (250) et un porte-outil dans le poste de travail (200), vers une destination de transfert désignée, qui est l'un parmi la machine-outil (400, 400A à 400F), la section de stockage d'outils (250) et le poste de travail (200),
le programme de commande (122) étant **caractérisé en ce qu'**il amène le système de transfert d'outil (10) à exécuter :
une étape consistant à déterminer si un porte-outil à retirer de la machine-outil (400, 400A à 400F) comporte ou non un porte-outil portant un outil inutilisable ; et
une étape consistant à commander le dispositif de transfert (300) de manière à transférer le porte-outil à retirer, depuis la machine-outil (400, 400A à 400F) vers le poste de travail (200) si le porte-outil à retirer comporte un porte-outil portant un outil inutilisable.
